# EUROPEAN PATENT SPECIFICATION

(11) **EP 3 804 091 B1**
(45) Date of publication and mention of the grant of the patent: **29.11.2023**
(21) Application number: 18752287.5
(22) Date of filing: 07.06.2018
(51) Int. Cl.: H02K 1/27, H02K 1/24

(54) **ROTOR FOR AN ELECTRICAL MACHINE AND ELECTRICAL MACHINE COMPRISING SAID ROTOR**
ROTOR FÜR EINE ELEKTRISCHE MASCHINE UND ELEKTRISCHE MASCHINE MIT DIESEM ROTOR
ROTOR POUR MACHINE ÉLECTRIQUE ET MACHINE ÉLECTRIQUE COMPRENANT LEDIT ROTOR

(43) Date of publication of application: 14.04.2021
(73) Proprietor: Mavel edt S.p.A., 11026 Pont Saint Martin (AO) (IT)
(72) Inventor: FAVRE, Luca, 11026 Pont Saint Martin (AO) (IT); BETTONI, Davide, 11026 Pont Saint Martin (AO) (IT); BORELLO, Fabio, 11026 Pont Saint Martin (AO) (IT)
(74) Representative: Garavelli, Paolo
(86) International application number: PCT/IT2018/000082
(87) International publication number: WO 2019/234770

(56) References cited:
- EP-A1- 2 887 503
- WO-A2-2010/014844
- US-A- 5 903 080
- US-A1- 2018 138 764

## Description

The present invention refers to a rotor for an electrical machine, and to an electrical machine comprising said rotor.

In particular, the invention refers to a rotor for a synchronous reluctance electrical machine, of the type with permanent magnets.

An electrical machine typically comprises a fixed part, the stator, and a moving part, the rotor, coaxially arranged one inside the other. Typically, the rotor is placed inside the stator, which comprises electric coils adapted to generate a magnetic field which allows rotating the rotor. The rotor typically comprises a body composed of a pack of sheets and placed on a rotation shaft. In the electrical motor with permanent magnets, the sheets comprise seats for the permanent magnets.

EP2887503 discloses a rotor used for a magnet-assisted reluctance motor in which the rotor is rotated by reluctance torque and magnet torque. The rotor includes S-pole and N-pole magnets which are arc-shaped in cross-section. Each pole has three magnets, each magnet is embedded in the rotor in such a way that a convex side portion thereof faces center of the rotor. Distance between center of circular arcs of S-pole magnets and center of the rotor is different from distance between center of circular arcs of N-pole magnets and center of the rotor 3. The ratio of the two distances is 0.92. An outer peripheral section of an innermost-layer S-pole magnet is disposed in such a way as to protrude into an adjacent pole zone.

US2018138764 relates to an electric drive motor for a vehicle. The electric drive motor has a stator having a plurality of slots; and a rotor having a plurality of poles. The poles each have at least a first permanent magnet centered on a d-axis of the pole; and a plurality of flux barriers for disrupting at least an n-th order torque harmonic of the electric drive motor. Proximal to an outer surface of the rotor, a first angular period (x11) between first and secondary flux barriers is defined by the equation (xi1=tao/n1), whereby: (xi1) is the first angular period; (tao) is the pole step; and n1 is an order number of a torque harmonic to be disrupted.

WO2010014844 discloses an electric machine including a stator and a rotor core including a first rotor portion positioned adjacent the stator and having an outside diameter. The first rotor portion includes a plurality of elongated slots that define a plurality of poles. The electric machine also includes a plurality of magnets. Each of the plurality of magnets is positioned within one of the slots and arranged such that each of the plurality of poles has a magnetic arc length that is different than a magnetic arc length of any adjacent pole.

In the electrical machines, and in particular in high performance electrical motors with permanent magnets, an important paramater is given by the air gap between the rotor and the stator: the smaller the air gap, the better the performances of the electrical machine, but this implies costly high-precision workings. A problem of synchronous reluctance electrical machines, of the type with permanent magnets, is given by the vibrations generated by the torque ripples and the counter-electromotive force harmonics, which can generate rotor vibrations and high losses.

An object of the present invention is obtaining a rotor of an electrical machine and an electrical machine which guarantee a better efficiency, allowing to obtain better performances with a big air gap, which implies higher working tolerances of the rotor and lower costs.

Another object of the present invention is reducing the torque ripple and the counter-electromotive force harmonics.

The above and other objects and advantages of the invention, as will result from the following description, are obtained with a rotor for an electrical machine and an electrical machine as claimed in the independent claims.

Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as appear from the enclosed claims.

The present invention will be better described by some preferred embodiments thereof, provided as a non-limiting example, with reference to the enclosed drawings, in which:

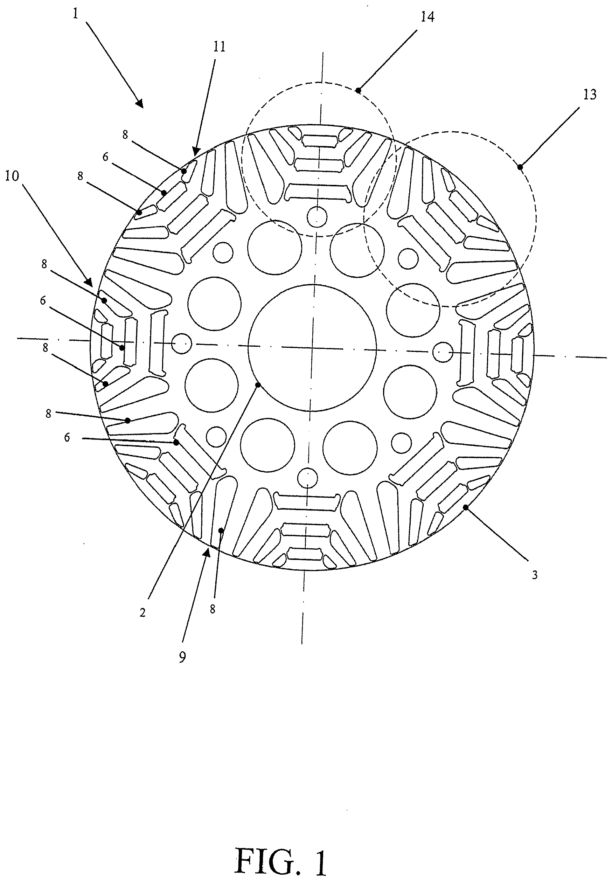

- Figure 1 shows a front view of a rotor for electrical machine according to the invention;

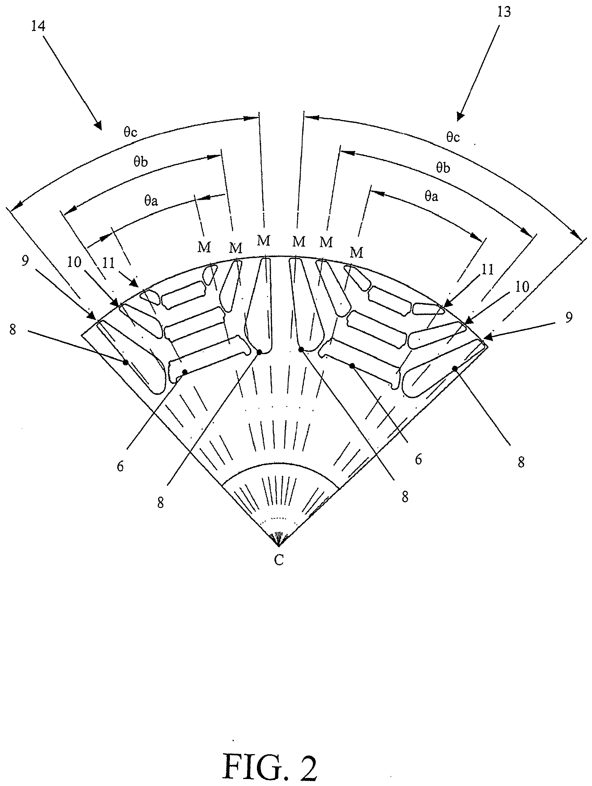

- Figure 2 shows a partial view of a rotor for electrical machine according to the invention; and
- Figure 3 shows a partial view of two poles and an enlarged detail of a rotor for electrical machine according to the invention.

With reference to the Figures, the rotor 1 for an electrical machine of the invention comprises: a rotation shaft; a lamellar pack fastened onto the rotation shaft and comprising a plurality of identical sheets 3, comprising a central hole 2 crossed by the rotation shaft and a plurality of axial recesses 6, 8, which cross the sheets 3 from part to part. In particular, each sheet 3 comprises: a plurality of first axial recesses 6, preferably of a trapezoidal, rectangular or squared shape, arranged radially one below the other and mutually spaced, and magnetic flow generators inserted in the first axial recesses 6, preferably in the permanent magnets shaped as bars; a plurality of second axial recesses 8 inclined from the radial direction, which start from the first axial recesses 6 to arrive next to the edge of the sheet 3.

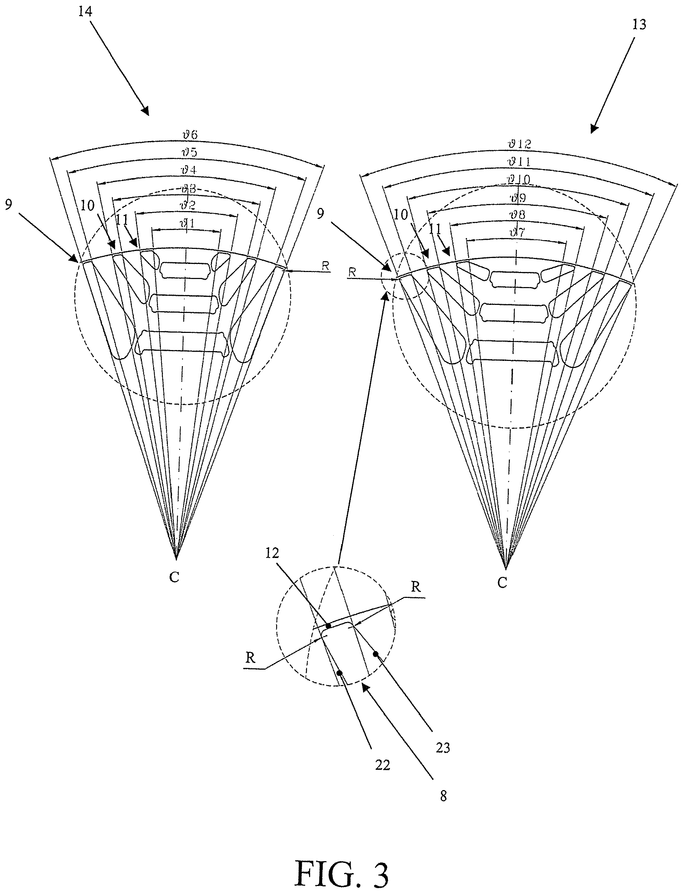

Said second axial recesses 8, having an inclined radial direction, have a surface 12 substantially parallel to the edge of the sheet 3, joined with a first side surface 22 and a second side surface 23 through two connection radiuses R, as shown in the enlarged detail of Figure 3.

In a preferred way, the rotor 1 comprises eight magnetic poles 13, 14, each comprising three flow barriers 9, 10, 11. In particular, each flow barrier 9, 10, 11 comprises: a first axial recess 6 adapted to house a flow generator, preferably a permanent magnet; a pair of second axial recesses 8 inclined and symmetrically arranged with respect to said first axial recess 6. In this way, each flow barrier 9, 10, 11 forms a design similar to a "V", whose base is flattened and formed by the first axial recess 6 and whose inclined arms are formed of the pair of second axial recesses 8. Each flow barrier 9, 10, 11 corresponds to a mean opening angle θa, θb, θc which defines the width of the "V" shape. Said mean opening angles θa, θb, θc are located by two straight lines passing each for a rotation center C of the rotor 1 and for a medium point M of the surface 12 substantially parallel to the edge of the sheet 3, in the second radial, inclined axial recesses 8 of each flow barrier 9, 10, 11.

In a preferred way, the rotor 1 comprises four primary magnetic poles 13 and four secondary magnetic poles 14, each comprising three flow barriers 9, 10, 11. In particular, each of the four primary magnetic poles 13 preferably comprises an internal flow barrier 11 whose mean opening angle θa is substantially equal to 20°, an intermediate flow barrier 10 whose mean opening angle θb is substantially equal to 31,2°, an external flow barrier 9 whose mean opening angle θc is substantially equal to 41,9°; each of the four secondary magnetic poles 14 preferably comprises an internal flow barrier 11 whose mean opening angle θa is substantially equal to 14,4°, an intermediate flow barrier 10 whose mean opening angle θb is substantially equal to 25°, an external flow barrier 9 whose mean opening angle θc is substantially equal to 36,2°.

A second mode for defining the width of the three flow barriers 9, 10, 11 of each primary and secondary magnetic pole 13, 14 is locating the opening angles θ1, θ2, ..., θ12, included between two straight lines projected by the theoretical rotation center C of the rotor 1 and each passing by a joining point R of the surface 12, substantially parallel to the edge of the sheet 3 of each second inclined axial recess 8, with the first or with the second side surface 22, 23 of each second axial recess 8 inclined.

In particular, for each flow barrier 9, 10, 11 an internal opening angle θ1, θ3, θ5, θ7, θ9, θ11 is located, included between two straight lines projected by the rotation center C of the rotor 1 and passing by the joining point R of the surface 12 substantially parallel to the edge of the sheet 3 of each second inclined axial recess 8 with the second side surface 23 of each second axial recess 8 inclined, and an external opening angle θ2, θ4, θ6, θ8, θ10, θ12 is further located, included between two straight lines projected by the rotation center C of the rotor 1 and tangent to the joining point R of the surface 12 substantially parallel to the edge of the sheet 3 of each second inclined axial recess 8 with the first side surface 22 of each second axial recess 8 inclined.

The following Table 1 lists the values of the opening angles θ1, θ2, ..., θ12 for a generic number Pp of pairs of primary magnetic poles 13 and secondary magnetic poles 14 of the rotor 1.

For example, for the previously described rotor 1, having eight poles (four pairs of poles), the number Pp is equal to four and the angle θ1 is equal to (47° 43' ± 2°)/4, and namely 11° 56' ± 0.5°.

**Table 1**

| SYMBOL | ANGLE'Pp |
|---|---|
| ϑ1 | 47° 43' ± 2° |
| ϑ2 | 67° 14' ± 2° |
| ϑ3 | 92° 43' ± 2° |
| ϑ4 | 107° 14' ± 2° |
| ϑ5 | 137° 45' ± 2° |
| ϑ6 | 152° 14' ± 2° |
| ϑ7 | 70° 14' ± 2° |
| ϑ8 | 89° 43' ± 2° |
| ϑ9 | 115° 14' ± 2° |
| ϑ10 | 134° 45' ± 2° |
| ϑ11 | 157° 45' ± 2° |
| ϑ12 | 177° 16' ± 2° |

In particular, each of the primary magnetic poles 13 comprises: an internal flow barrier 11 whose external opening angle θ8 multiplied by the number Pp of pairs of poles is included between 87° 43' and 91° 43', in a preferred way substantially equal to 89° 43'; an intermediate flow barrier 10 whose external opening angle θ10 multiplied by the number Pp of pairs of poles is included between 132° 45' and 136° 45', in a preferred way substantially equal to 134° 45'; an external flow barrier 9 whose external opening angle θ12 multiplied by the number Pp of pairs of poles is included between 175° 16' and 179° 16', in a preferred way substantially equal to 177° 16'; each of the secondary magnetic poles 14 comprises: an internal flow barrier 11 whose external opening angle θ2 multiplied by the number Pp of pairs of poles is included between 65° 14' and 69° 14', in a preferred way substantially equal to 67° 14'; an intermediate flow barrier 10 whose external opening angle θ4 multiplied by the number Pp of pairs of poles is included between 105° 14' and 109° 14', in a preferred way substantially equal to 107° 14'; an external flow barrier 9 whose external opening angle θ6 multiplied by the number Pp of pairs of poles is included between 150° 14' and 154° 14', in a preferred way substantially equal to 152° 14'.

Moreover, each of the primary magnetic poles 13 comprises: an internal flow barrier 11 whose internal opening angle θ7 multiplied by the number Pp of pairs of poles is included between 68° 14' and 72° 14', in a preferred way substantially equal to 70° 14'; an intermediate flow barrier 10 whose internal opening angle θ9 multiplied by the number Pp of pairs of poles is included between 113° 14' and 117° 14', in a preferred way substantially equal to 115° 14'; an external flow barrier 9 whose internal opening angle θ11 multiplied by the number Pp of pairs of poles is included between 155° 45' and 159° 45', in a preferred way substantially equal to 157° 44'; each of the secondary magnetic poles 14 comprises: an internal flow barrier 11 whose internal opening angle θ1 multiplied by the number Pp of pairs of poles is included between 45° 43' and 49° 43', in a preferred way substantially equal to 47° 43'; an intermediate flow barrier 10 whose internal opening angle θ3 multiplied by the number Pp of pairs of poles is included between 90° 43' and 94° 43', in a preferred way substantially equal to 92° 43'; an external flow barrier 9 whose internal opening angle θ5 multiplied by the number Pp of pairs of poles is included between 135° 45' and 139° 45', in a preferred way substantially equal to 137° 45'.
Preferably, the connection radiuses R between the surface 12 substantially parallel to the edge of the sheet 3 and the first or the second side surface 22, 23 of each axial inclined recess 8 are included within the range 0.2 - 1 mm. Preferably, the rotor 1 comprises alternate primary magnetic poles 13 and secondary magnetic poles 14. In this way, the flow barriers 9, 10, 11 of two consecutive magnetic poles 13, 14 are mutually asymmetrical and this limits, with respect to known electrical machines, the torque ripple and the counter-electromotive force harmonics.

It is anyway possible to have all distance spectra which satisfy the above specified angle values.

In a known way, an electrical machine comprises a fixed part, the stator, and a moving part, the rotor, arranged coaxially one inside the other. Typically, the rotor is placed inside the stator, which comprises electric coils adapted to generate a magnetic field which allows rotating the rotor.

The electrical machine according to the invention further comprises the previously described rotor 1, and between the rotor 1 and the stator, an air gap whose thickness is included between 0.5 mm and 1.5 mm.

## Claims

1. Rotor (1) for electrical machine comprising:
- a rotation shaft;
- a lamellar pack fastened onto the rotation shaft and comprising a plurality of sheets (3), comprising a number (Pp) of pairs of primary magnetic poles (13) and secondary magnetic poles (14), wherein the number of magnetic pole pairs (Pp) is four,
each magnetic pole comprising three flow barriers (9, 10, 11), each comprising:
- a first axial recess (6) adapted to house a flow generator;
- a pair of second inclined axial recesses (8), symmetrically arranged with respect to said first axial recess (6) and having a surface (12) substantially parallel to the edge of the sheet (3), joined with a first side surface (22) and a second side surface (23);
wherein the width of the three flow barriers (9, 10, 11) of each primary magnetic pole (13) and secondary magnetic pole (14) is defined by external opening angles (θ2, θ4, θ6, θ8, θ10, θ12) included between two straight lines projected by a theoretical rotation center (C) of the rotor (1) and each tangent to a joining point (R) of the surface (12) substantially parallel to the edge of the sheet (3) of each second inclined axial recess (8) with the first side surface (22) of each second inclined axial recess (8) and wherein:
- each of said primary magnetic poles (13) comprises an internal flow barrier (11) whose external opening angle (θ8) multiplied by the number (Pp) of pairs of poles is included between 87° 43' and 91° 43', an intermediate flow barrier (10) whose external opening angle (θ10) multiplied by the number (Pp) of pairs of poles is included between 132° 45' and 136° 45', an external flow barrier (9) whose external opening angle (θ12) multiplied by the number (Pp) of pairs of poles is included between 175° 16' and 179° 16'; and
- each of said secondary magnetic poles (14) comprises an internal flow barrier (11) whose external opening angle (θ2) multiplied by the number (Pp) of pairs of poles is included between 65° 14' and 69° 14', an intermediate flow barrier (10) whose external opening angle (θ4) multiplied by the number (Pp) of pairs of poles is included between 105° 14' and 109° 14', an external flow barrier (9) whose external opening angle (θ6) multiplied by the number (Pp) of pairs of poles is included between 150° 14' and 154° 14', wherein the width of the three flow barriers (9, 10, 11) of each primary magnetic pole (13) and secondary magnetic pole (14) is defined by internal opening angles (θ1, θ3, θ5, θ7, θ9, θ11) included between two straight lines projected by a theoretical rotation center (C) of the rotor (1) and each passing by a joining point (R) of the surface (12) substantially parallel to the edge of the sheet (3) of each second inclined axial recess (8) with the second side surface (23) of each second inclined axial recess (8) and **characterized in that**:
- each of said primary magnetic poles (13) comprises an internal flow barrier (11) whose internal opening angle (θ7) multiplied by the number (Pp) of pairs of poles is included between 68° 14' and 72° 14', an intermediate flow barrier (10) whose internal opening angle (θ9) multiplied by the number (Pp) of pairs of poles is included between 113° 14' and 117° 14', an external flow barrier (9) whose internal opening angle (θ11) multiplied by the number (Pp) of pairs of poles is included between 155° 45' and 159° 45'; and
- each of said secondary magnetic poles (14) comprises an internal flow barrier (11) whose internal opening angle (θ1) multiplied by the number (Pp) of pairs of poles is included between 45° 43' and 49° 43', an intermediate flow barrier (10) whose internal opening angle (θ3) multiplied by the number (Pp) of pairs of poles is included between 90° 43' and 94° 43', an external flow barrier (9) whose internal opening angle (θ5) multiplied by the number (Pp) of pairs of poles is included between 135° 45' and 139° 45'.

2. Rotor (1) for electrical machine according to claim 1, **characterized in that**:
- each of said primary magnetic poles (13) comprises an internal flow barrier (11) whose external opening angle (θ8) multiplied by the number (Pp) of pairs of poles is substantially equal to 89° 43', an intermediate flow barrier (10) whose external opening angle (θ10) multiplied by the number (Pp) of pairs of poles is substantially equal to 134° 45', an external flow barrier (9) whose external opening angle (θ12) multiplied by the number (Pp) of pairs of poles is substantially equal to 177° 16'; and
- each of said secondary magnetic poles (14) comprises an internal flow barrier (11) whose external opening angle (θ2) multiplied by the number (Pp) of pairs of poles is substantially equal to 67° 14', an intermediate flow barrier (10) whose external opening angle (θ4) multiplied by the number (Pp) of pairs of poles is substantially equal to 107° 14', an external flow barrier (9) whose external opening angle (θ6) multiplied by the number (Pp) of pairs of poles is substantially equal to 152° 14'.

3. Rotor (1) for electrical machine according to any one of the previous claims, **characterized in that**:
- each of said primary magnetic poles (13) comprises an internal flow barrier (11) whose internal opening angle (θ7) multiplied by the number (Pp) of pairs of poles is substantially equal to 70° 14', an intermediate flow barrier (10) whose internal opening angle (θ9) multiplied by the number (Pp) of pairs of poles is substantially equal to 115° 14', an external flow barrier (9) whose internal opening angle (θ11) multiplied by the number (Pp) of pairs of poles is substantially equal to 157° 45'; and
- each of said secondary magnetic poles (14) comprises an internal flow barrier (11) whose internal opening angle (θ1) multiplied by the number (Pp) of pairs of poles is substantially equal to 47° 43', an intermediate flow barrier (10) whose internal opening angle (θ3) multiplied by the number (Pp) of pairs of poles is substantially equal to 92° 43', an external flow barrier (9) whose internal opening angle (θ5) multiplied by the number (Pp) of pairs of poles is substantially equal to 137° 45'.

4. Rotor (1) for electrical machine according to any one of the previous claims, **characterized in that** the width of the three flow barriers (9, 10, 11) of each primary magnetic pole (13) and secondary magnetic pole (14) is defined by mean opening angles (θa, θb, θc) located by two straight lines, each passing by the rotation center (C) of the rotor (1) and by a medium point (M) of the surface (12) substantially parallel to the edge of the sheet (3) of the second radial, inclined axial recesses (8) of each flow barrier (9, 10, 11), and wherein it comprises:
- four primary magnetic poles (13), each comprising an internal flow barrier (11) whose mean opening angle (θa) is substantially equal to 20°, an intermediate flow barrier (10) whose mean opening angle (θb) is substantially equal to 31.2°, an external flow barrier (9) whose mean opening angle (θc) is substantially equal to 41.9°;
- four secondary magnetic poles (14), each comprising an internal flow barrier (11) whose mean opening angle (θa) is substantially equal to 14.4°, an intermediate flow barrier (10) whose mean opening angle (θb) is substantially equal to 25°, an external flow barrier (9) whose mean opening angle (θc) is substantially equal to 36.2°.

5. Electrical machine comprising a fixed part, the stator, and the rotor (1) according to any one of the previous claims, arranged moving inside the stator, **characterized in that** it comprises, between the rotor (1) and the stator, an air gap whose thickness is included between 0.5 mm and 1.5 mm.

## Patentansprüche

1. Rotor (1) für elektrische Maschine umfassend:
- eine Drehwelle;
- ein Lamellenpaket, das auf der Drehwelle befestigt ist und mehrere Lamellen (3) umfasst, die eine Anzahl (Pp) von Paaren primärer Magnetpole (13) und sekundärer Magnetpole (14) umfassen, wobei die Anzahl der Paare magnetischer Pole beträgt (Pp) vier beträgt, wobei jeder Magnetpol drei Flussbarrieren (9, 10, 11) umfasst, von denen jede Folgendes umfasst:
- einen ersten axialen Hohlraum (6), der einen Strömungsgenerator aufnehmen kann;
- ein Paar zweiter geneigter axialer Hohlräume (8), die symmetrisch in Bezug auf den ersten axialen Hohlraum (6) angeordnet sind und eine Oberfläche (12) aufweisen, die im Wesentlichen parallel zum Rand des Blechs (3) verläuft und mit einer ersten Seitenfläche (22) verbunden ist und eine zweite Seitenfläche (23);
wobei die Amplitude der drei Flussbarrieren (9, 10, 11) jedes primären Magnetpols (13) und sekundären Magnetpols (14) durch äußere Öffnungswinkel (θ2, θ4, θ6, θ8, θ10, θ12) dazwischen definiert ist zwei gerade Linien, die von einem theoretischen Rotationszentrum (C) des Rotors (1) projiziert werden und jeweils einen Verbindungspunkt (R) der Oberfläche (12) tangieren, der im Wesentlichen parallel zum Rand der Lamelle (3) jedes zweiten Hohlraums verläuft geneigter axialer Hohlraum (8) mit der ersten Seitenfläche (22) jedes zweiten geneigten axialen Hohlraums (8), und wobei:
- die primären Magnetpole (13) jeweils eine interne Flussbarriere (11) umfassen, deren äußerer Öffnungswinkel (θ8), multipliziert mit der Anzahl (Pp) der Polpaare, zwischen 87° 43' und 91° 43' liegt, ein Zwischenfluss Barriere (10), deren äußerer Öffnungswinkel (θ10) multipliziert mit der Polpaarzahl (Pp) zwischen 132° 45' und 136° 45' liegt, eine äußere Strömungsbarriere (9), deren äußerer Öffnungswinkel (θ12) multipliziert mit der Anzahl (Pp) der Polpaare liegt zwischen 175° 16' und 179° 16'; und
- die sekundären Magnetpole (14) jeweils eine interne Flussbarriere (11) umfassen, deren äußerer Öffnungswinkel (θ2), multipliziert mit der Anzahl (Pp) der Polpaare, zwischen 65° 14' und 69° 14' liegt, ein Zwischenfluss Barriere (10), deren äußerer Öffnungswinkel (θ4) multipliziert mit der Polpaarzahl (Pp) zwischen 105° 14' und 109° 14' liegt, eine äußere Strömungsbarriere (9), deren äußerer Öffnungswinkel (θ6) multipliziert mit der Anzahl (Pp) der Polpaare liegt zwischen 150° 14' und 154° 14',
wobei die Amplitude der drei Flussbarrieren (9, 10, 11) jedes primären Magnetpols (13) und sekundären Magnetpols (14) durch interne Öffnungswinkel (θ1, θ3, θ5, θ7, θ9, θ11) dazwischen definiert ist zwei gerade Linien, die von einem theoretischen Rotationszentrum (C) des Rotors (1) projiziert werden und jeweils durch einen Verbindungspunkt (R) der Oberfläche (12) verlaufen, der im Wesentlichen parallel zum Rand der Lamelle (3) jedes zweiten Hohlraums verläuft geneigten axialen Hohlraum (8) mit der zweiten Seitenfläche (23) jedes zweiten geneigten axialen Hohlraums (8) und **dadurch gekennzeichnet, dass**:
- die primären Magnetpole (13) jeweils eine interne Flussbarriere (11) umfassen, deren interner Öffnungswinkel (θ7), multipliziert mit der Anzahl (Pp) der Polpaare, zwischen 68° 14' und 72° 14' liegt, ein Zwischenfluss Barriere (10), deren innerer Öffnungswinkel (θ9) multipliziert mit der Anzahl (Pp) der Polpaare zwischen 113° 14' und 117° 14' liegt, eine äußere Strömungssperre (9), deren äußerer Öffnungswinkel (θ11) multipliziert mit der Anzahl (Pp) der Polpaare liegt zwischen 155° 45' und 159° 45'; und
- die sekundären Magnetpole (14) jeweils eine interne Flussbarriere (11) umfassen, deren äußerer Öffnungswinkel (01), multipliziert mit der Anzahl (Pp) der Polpaare, zwischen 45° 43' und 49° 43' liegt, ein Zwischenfluss Barriere (10), deren äußerer Öffnungswinkel (θ3) multipliziert mit der Polpaarzahl (Pp) zwischen 90° 43' und 94° 43' liegt, eine äußere Strömungsbarriere (9), deren äußerer Öffnungswinkel (θ5) multipliziert mit der Die Anzahl (Pp) der Polpaare liegt zwischen 135° 45' und 139° 45'.

2. Rotor (1) für eine elektrische Maschine nach Anspruch 1, **dadurch gekennzeichnet, dass**:
- die primären Magnetpole (13) jeweils eine interne Flussbarriere (11) umfassen, deren äußerer Öffnungswinkel (θ8) multipliziert mit der Anzahl (Pp) der Polpaare im Wesentlichen 89° 43' beträgt, eine Barriere des Zwischenflusses ( 10) deren äußerer Öffnungswinkel (θ10) multipliziert mit der Anzahl (Pp) der Polpaare im Wesentlichen gleich 134° 45' ist, eine äußere Strömungsbarriere (9), deren äußerer Öffnungswinkel (θ12) multipliziert mit der Anzahl (Pp) der Polpaare ist im Wesentlichen gleich 177° 16'; und
- die sekundären Magnetpole (14) jeweils eine interne Flussbarriere (11) umfassen, deren äußerer Öffnungswinkel (θ2), multipliziert mit der Anzahl (Pp) der Polpaare, im Wesentlichen gleich 67° 14' ist, eine Barriere des Zwischenflusses (10) deren äußerer Öffnungswinkel (θ4) multipliziert mit der Anzahl (Pp) der Polpaare im Wesentlichen gleich 107° 14' ist, eine äußere Strömungssperre (9), deren äußerer Öffnungswinkel (θ6) multipliziert mit der Anzahl (Pp) der Polpaare beträgt im Wesentlichen 152° 14'.

3. Rotor (1) für eine elektrische Maschine nach einem der vorhergehenden Ansprüche, **dadurch gekennzeichnet, dass**:
- die primären Magnetpole (13) umfassen jeweils eine interne Flussbarriere (11), deren interner Öffnungswinkel (θ7) multipliziert mit der Anzahl (Pp) der Polpaare im Wesentlichen 70° 14' beträgt, einer Flussbarriere (10) deren innerer Öffnungswinkel (θ9) multipliziert mit der Anzahl (Pp) der Polpaare im Wesentlichen gleich 115° 14' ist, eine äußere Strömungssperre (9), deren äußerer Öffnungswinkel (θ11) multipliziert mit der Zahl (Pp) der Polpaare beträgt im Wesentlichen 157° 45'; und
- die sekundären Magnetpole (14) umfassen jeweils eine interne Flussbarriere (11), deren äußerer Öffnungswinkel (θ1), multipliziert mit der Anzahl (Pp) der Polpaare, im Wesentlichen 47° 43' beträgt, eine Barriere des Zwischenflusses ( 10) deren äußerer Öffnungswinkel (θ3) multipliziert mit der Anzahl (Pp) der Polpaare im Wesentlichen gleich 92° 43' ist, eine äußere Strömungssperre (9), deren äußerer Öffnungswinkel (θ5) multipliziert mit der Anzahl (Pp) der Polpaare beträgt im Wesentlichen 137° 45'.

4. Rotor (1) für eine elektrische Maschine nach einem der vorhergehenden Ansprüche, **dadurch gekennzeichnet, dass** die Breite der drei Flussbarrieren (9, 10, 11) jeweils primärer (13) und sekundärer (14) Magnetpol ist definiert durch mittlere Öffnungswinkel (θa, θb, θc), die durch zwei gerade Linien identifiziert werden, die jeweils durch das Rotationszentrum (C) des Rotors (1) und durch einen Mittelpunkt (M) der Oberfläche (12) verlaufen, der im Wesentlichen parallel dazu verläuft Rand der Lamelle (3) der zweiten geneigten radialen axialen Aussparungen (8) jeder Strömungssperre (9, 10, 11), wobei sie umfasst:
- vier primäre Magnetpole (13), die jeweils eine interne Flussbarriere (11) umfassen, deren mittlerer Öffnungswinkel (θa) im Wesentlichen gleich 20° ist, und eine Zwischenflussbarriere (10), deren mittlerer Öffnungswinkel (θb) im Wesentlichen gleich ist 31,2°, eine externe Strömungsbarriere (9), deren mittlerer Öffnungswinkel (θc) im Wesentlichen 41,9° beträgt;
- vier sekundäre Magnetpole (14), die jeweils eine interne Flussbarriere (11) umfassen, deren durchschnittlicher Öffnungswinkel (θa) im Wesentlichen gleich 14,4° ist, und eine Zwischenflussbarriere (10), deren durchschnittlicher Öffnungswinkel (θb) im Wesentlichen gleich ist bis 25°, eine externe Strömungsbarriere (9), deren mittlerer Öffnungswinkel (θc) im Wesentlichen 36,2° beträgt.

5. Elektrische Maschine bestehend aus einem feststehenden Teil, dem Stator, und dem Rotor (1) nach einem der vorhergehenden Ansprüche, der beweglich innerhalb des Stators angeordnet ist, **dadurch gekennzeichnet, dass** sie zwischen dem Rotor (1) und dem Stator einen Luftspalt aufweist mit einer Dicke zwischen 0,5 mm und 1,5 mm.

## Revendications

1. Rotor (1) pour machine électrique comprenant:
- un arbre de rotation;
- un paquet lamellaire fixé sur l'arbre de rotation et comprenant une pluralité de tôles (3), comprenant un nombre (Pp) de paires de pôles magnétiques primaires (13) et de pôles magnétiques secondaires (14), le nombre de paires de pôles magnétiques (Pp) vaut quatre, chaque pôle magnétique comprenant trois barrières de flux (9, 10, 11), chacune comprenant:
- une première cavité axiale (6) apte à loger un générateur de flux;
- une paire de deuxièmes cavités axiales inclinées (8), disposées symétriquement par rapport à ladite première cavité axiale (6) et ayant une surface (12) sensiblement parallèle au bord de la tôle (3), reliée à une première surface latérale (22) et une seconde surface latérale (23);
où l'amplitude des trois barrières de flux (9, 10, 11) de chaque pôle magnétique primaire (13) et pôle magnétique secondaire (14) est définie par des angles d'ouverture externes (θ2, θ4, θ6, θ8, θ10, θ12) entre deux droites projetées à partir d'un centre de rotation théorique (C) du rotor (1) et chacune tangente à un point de raccordement (R) de la surface (12) sensiblement parallèle au bord de la tôle (3) de chaque seconde cavité axiale inclinée (8) avec la première surface latérale (22) de chaque seconde cavité axiale inclinée (8), et dans lequel:
- lesdits pôles magnétiques primaires (13) comportent chacun une barrière de flux interne (11) dont l'angle d'ouverture externe (θ8) multiplié par le nombre (Pp) de paires de pôles est compris entre 87° 43' et 91° 43' , un flux intermédiaire barrière (10) dont l'angle d'ouverture externe (θ10) multiplié par le nombre (Pp) de paires de pôles est compris entre 132° 45' et 136° 45', une barrière anti-écoulement externe (9) dont l'angle d'ouverture externe (θ12) multiplié par le le nombre (Pp) de paires de pôles est compris entre 175° 16' et 179° 16'; et
- lesdits pôles magnétiques secondaires (14) comportent chacun une barrière de flux interne (11) dont l'angle d'ouverture externe (θ2) multiplié par le nombre (Pp) de paires de pôles est compris entre 65° 14' et 69° 14' , un flux intermédiaire barrière (10) dont l'angle d'ouverture externe (θ4) multiplié par le nombre (Pp) de paires de pôles est compris entre 105° 14' et 109° 14', une barrière de flux externe (9) dont l'angle d'ouverture externe (θ6) multiplié par le le nombre (Pp) de paires de pôles est compris entre 150° 14' et 154° 14',
où l'amplitude des trois barrières de flux (9, 10, 11) de chaque pôle magnétique primaire (13) et pôle magnétique secondaire (14) est définie par des angles d'ouverture internes (θ1, θ3, θ5, θ7, θ9, θ11) entre deux droites projetées à partir d'un centre de rotation théorique (C) du rotor (1) et passant chacune par un point de raccordement (R) de la surface (12) sensiblement parallèle au bord de la tôle (3) de chaque seconde cavité cavité axiale inclinée (8) avec la seconde surface latérale (23) de chaque seconde cavité axiale inclinée (8), et **caractérisé en ce que**:
- lesdits pôles magnétiques primaires (13) comportent chacun une barrière de flux interne (11) dont l'angle d'ouverture interne (θ7) multiplié par le nombre (Pp) de paires de pôles est compris entre 68° 14' et 72° 14' , un flux intermédiaire barrière (10) dont l'angle d'ouverture interne (θ9) multiplié par le nombre (Pp) de paires de pôles est compris entre 113° 14' et 117° 14', une barrière de flux externe (9) dont l'angle d'ouverture externe (θ11) multiplié par le le nombre (Pp) de paires de pôles est compris entre 155° 45' et 159° 45'; et
- lesdits pôles magnétiques secondaires (14) comportent chacun une barrière de flux interne (11) dont l'angle d'ouverture externe (θ1) multiplié par le nombre (Pp) de paires de pôles est compris entre 45° 43' et 49° 43' , un flux intermédiaire barrière (10) dont l'angle d'ouverture externe (θ3) multiplié par le nombre (Pp) de paires de pôles est compris entre 90° 43' et 94° 43', une barrière anti-écoulement externe (9) dont l'angle d'ouverture externe (θ5) multiplié par le nombre (Pp) de paires de pôles est compris entre 135° 45' et 139° 45'.

2. Rotor (1) de machine électrique selon la revendication 1, **caractérisé en ce que**:
- lesdits pôles magnétiques primaires (13) comportent chacun une barrière de flux interne (11) dont l'angle d'ouverture externe (θ8) multiplié par le nombre (Pp) de paires de pôles est sensiblement égal à 89° 43', une barrière de flux intermédiaire (10) dont l'angle d'ouverture externe (θ10) multiplié par le nombre (Pp) de paires de pôles est sensiblement égal à 134° 45', une barrière anti-écoulement externe (9) dont l'angle d'ouverture externe (θ12 ) multiplié par le nombre (Pp) de paires de pôles est sensiblement égal à 177° 16'; et
- lesdits pôles magnétiques secondaires (14) comportent chacun une barrière de flux interne (11) dont l'angle d'ouverture externe (θ2) multiplié par le nombre (Pp) de paires de pôles est sensiblement égal à 67° 14', une barrière de flux intermédiaire (10) dont l'angle d'ouverture externe (θ4) multiplié par le nombre (Pp) de paires de pôles est sensiblement égal à 107° 14', une barrière anti-écoulement externe (9) dont l'angle d'ouverture externe (θ6 ) multiplié par le nombre (Pp) de paires de pôles est sensiblement égal à 152° 14'.

3. Rotor (1) de machine électrique selon l'une quelconque des revendications précédentes, **caractérisé en ce que**:
- lesdits pôles magnétiques primaires (13) comportent chacun une barrière de flux interne (11) dont l'angle d'ouverture interne (θ7) multiplié par le nombre (Pp) de paires de pôles est sensiblement égal à 70° 14', une barrière de barrière de flux (10) dont l'angle d'ouverture interne (θ9) multiplié par le nombre (Pp) de paires de pôles est sensiblement égal à 115° 14', une barrière à flux externe (9) dont l'angle d'ouverture externe (θ11) multiplié par le nombre (Pp) de paires de pôles est sensiblement égal à 157° 45'; et
- lesdits pôles magnétiques secondaires (14) comportent chacun une barrière de flux interne (11) dont l'angle d'ouverture externe (θ1) multiplié par le nombre (Pp) de paires de pôles est sensiblement égal à 47° 43', une barrière de flux intermédiaire (10) dont l'angle d'ouverture externe (θ3) multiplié par le nombre (Pp) de paires de pôles est sensiblement égal à 92° 43', une barrière anti-écoulement externe (9) dont l'angle d'ouverture externe (θ5 ) multiplié par le nombre (Pp) de paires de pôles est sensiblement égal à 137° 45'.

4. Rotor (1) de machine électrique selon l'une quelconque des revendications précédentes, **caractérisé en ce que** la largeur des trois barrières de flux (9, 10, 11) de chaque pôle magnétique primaire (13) et secondaire (14) est défini par des angles d'ouverture moyens (θa, θb, θc) repérés par deux droites passant chacune par le centre de rotation (C) du rotor (1) et par un point médian (M) de la surface (12) sensiblement parallèle au bord de la tôle (3) des deuxièmes évidements axiaux radiaux inclinés (8) de chaque barrière d'écoulement (9, 10, 11), **caractérisé en ce qu'**il comprend:
- quatre pôles magnétiques primaires (13), comprenant chacun une barrière de flux interne (11) dont l'angle d'ouverture moyen (θa) est sensiblement égal à 20°, une barrière de flux intermédiaire (10) dont l'angle d'ouverture moyen (θb) est sensiblement égal à 31,2°, une barrière à flux externe (9) dont l'angle moyen d'ouverture (θc) est sensiblement égal à 41,9°;
- quatre pôles magnétiques secondaires (14), comprenant chacun une barrière de flux interne (11) dont l'angle d'ouverture moyen (θa) est sensiblement égal à 14,4°, une barrière de flux intermédiaire (10) dont l'angle d'ouverture moyen d'ouverture (θb) est sensiblement égal à 25°, une barrière à flux externe (9) dont l'angle moyen d'ouverture (θc) est sensiblement égal à 36,2°.

5. Machine électrique comprenant une partie fixe, le stator, et le rotor (1) selon l'une quelconque des revendications précédentes, disposée de manière mobile à l'intérieur du stator, **caractérisée en ce qu'**elle comporte entre le rotor (1) et le stator un entrefer d'épaisseur comprise entre 0,5 mm et 1,5 mm.
